# EUROPÄISCHE PATENTANMELDUNG

(11) **EP 3 766 728 A1**
(43) Veröffentlichungstag der Anmeldung: **20.01.2021**
(21) Anmeldenummer: 20180977.9
(22) Anmeldetag: 19.06.2020
(51) Int. Cl.: B60L 53/31, B60L 53/18, G08B 13/22

(54) **LADESTATION SOWIE EIN VERFAHREN ZUR SICHERUNG EINES LADEKABELS AN EINER LADESTATION**

(30) Priorität: 16.07.2019 DE 102019119221
(71) Anmelder: Innogy SE, 45128 Essen (DE)
(72) Erfinder: Hermes, Dr. Roland, 45141 Essen (DE); Jundel, Sven, 44229 Dortmund (DE)
(74) Vertreter: Cohausz & Florack

(57) **Zusammenfassung**

Ladestation mit einem Versorgungsnetzanschluss, einem angeschlagenen Ladekabel mit Anschlussleitungen für ein Elektrofahrzeug und einer zwischen dem Versorgungsnetzanschluss und dem Ladekabel angeschlossenen Ladeschutzschaltung, dadurch gekennzeichnet, dass in dem Ladekabel zumindest eine Sicherungsleitung zumindest in Teilen die Ladeschutzschaltung überbrückend dauerhaft mit einem elektrischen Potential verbunden ist.

## Beschreibung

Der Gegenstand betrifft eine Ladestation sowie ein Verfahren zur Sicherung eines Ladekabels an einer Ladestation.

Der Aufbau der Ladeinfrastruktur ist von entscheidender Bedeutung für die Akzeptanz von Elektromobilität. Ein wesentlicher Aspekt der Ladeinfrastruktur ist die Verfügbarkeit von Ladestationen, insbesondere Ladestationen in öffentlichen als auch halb-öffentlichen Bereichen.

Ladestationen sind in zwei verschiedenen Ausprägungen bekannt. In einer ersten Ausprägung verfügt eine Ladestation über einen oder mehrere Ladeauslässe, die als Buchsen gebildet sind. Ein Nutzer einer solchen Ladestation kann ein von ihm mitgeführtes Ladekabel mit dem Ladeauslass verbinden. Über das benutzereigene Ladekabel erfolgt anschließend der Ladevorgang. Zum Ende des Ladevorgangs nimmt der Nutzer sein Ladekabel wieder mit. Dies ist insofern unpraktisch, als dass der Nutzer stets ein Ladekabel mitführen muss.

Die zweite Ausprägung der Ladestationen verfügt über ein oder mehrere sogenannte "fest angeschlagene" Ladekabel. Die Ladekabel sind integrale Bestandteile der Ladestation und im Inneren der Ladestation mit der Ladeelektronik verbunden. Ein solches Ladekabel ist aus der Ladestation herausgeführt und hat ein aus der Ladestation herausgeführtes, mehrere Meter langes freies Ende. An diesem freien ist ein Anschlussstecker vorgesehen, den ein Nutzer mit seinem Elektrofahrzeug verbinden kann, um so den Ladevorgang starten zu können.

Aufgrund der stetig wachsenden Ladeleistung werden die Anforderungen an Ladekabel stets höher, insbesondere was ihre Stromtragfähigkeit angeht. Eine hohe Stromtragfähigkeit geht einher mit einem großen Leitungsquerschnitt. Dies führt dazu, dass der Metallanteil in Ladekabeln erheblich ist. In der Regel werden darüber hinaus Kupferkabel eingesetzt, die einen besonders hohen Leitwert haben. Der große Leitungsquerschnitt zusammen mit dem verwendeten Metall birgt die Gefahr des Kabeldiebstahls. Gerade Kabeldiebstahl führt zu erheblichen Vorbehalten gegenüber fest angeschlagenen Ladekabeln.

Dem Gegenstand lag die Aufgabe zugrunde, ein fest angeschlagenes Ladekabel vor Diebstahl zu sichern.

Diese Aufgabe wird gegenständlich durch ein Ladekabel nach Anspruch 1 sowie ein Verfahren nach Anspruch 10 gelöst.

Die gegenständliche Ladestation ist über einen Versorgungsnetzanschluss mit einem elektrischen Versorgungsnetz gekoppelt. Der Versorgungsnetzanschluss ist in der Regel im Inneren der Ladestation als Anschlusskonsole gebildet. Die elektrische und mechanische Kopplung mit dem elektrischen Versorgungsnetz ist dauerhaft und in der Regel lediglich über einen Leistungstrennschalter abgesichert.

An der Ladestation ist ein angeschlagenes Ladekabel mit Anschlussleitungen für ein Elektrofahrzeug angeordnet. Dieses Ladekabel ist ein sogenanntes "fest angeschlagenes" Ladekabel, das elektrisch als auch mechanisch dauerhaft mit der Ladestation verbunden ist. Hierzu verfügt die Ladestation über eine Ladeelektronik, die insbesondere eine Ladeschutzschaltung aufweist. Eine Ladeschutzschaltung hat zumindest einen Fehlstromschalter (FI-Schalter) um eine Schnellabschaltung zu gewährleisten und ggf. auch einen Überspannungsschutz und/oder nicht einen Leitungsschutzschalter. Die Ladeschutzschaltung ist elektrisch zwischen dem Versorgungsnetzanschluss und dem Ladekabel angeordnet. Im Normalbetrieb fließt der Ladestrom über die Ladeschutzschaltung und das Ladekabel zum Elektrofahrzeug.

Die Ladeschutzschaltung führt zu einer Abschaltung des Ladestroms in einem Fehlerfall, z.B. einem Überstrom durch Kurzschluss. Die Ladeschutzschaltung sorgt dafür, dass beim einem Durchtrennen des Ladekabels während eines Ladevorgangs ein elektrischer Schlag vermieden wird. Im Falle der Inaktivität der Ladestation, also wenn kein Ladevorgang aktiv ist, ist das Ladekabel in der Regel spannungsfrei, so dass dann ein Durchtrennen des Ladekabels möglich ist, ohne dass die Ladeschutzschaltung auslöst. Somit ist in beiden Fällen ein Durchtrennen des Ladekabels ungefährlich, was den Kabeldiebstahl einfach macht.

Um Kabeldiebstahl in beiden Szenarien entgegenzuwirken, wird vorgeschlagen, dass in dem Ladekabel zumindest eine Sicherungsleitung zumindest in Teilen die Ladeschutzschaltung überbrückend angeordnet ist, die dauerhaft mit einem elektrischen Potential verbunden ist. Der Versorgungsnetzanschluss ist dabei ohne eine jegliche Sicherung oder über eine Sicherung mit einem erheblichen höheren Fehlstrom und/oder einer erheblich höheren Fehlleistung als die Ladeschutzschaltung mit der Sicherungsleitung verbunden. Die Sicherungsleitung ist somit unabhängig von einem Ladevorgang und unabhängig von der Ladeschutzschaltung dauerhaft auf einem elektrischen Potential. Im Falle eines versuchten Diebstahls wird die Sicherungsleitung durchtrennt und das daran anliegende Potential führt zu einem Stromschlag.

Diese Gefahr des Stromschlags dürfte abschreckend genug sein, Diebstahlversuche zu unterbinden.

Gemäß einem Ausführungsbeispiel wird vorgeschlagen, dass die Sicherungsleitung zusammen mit den Anschlussleitungen für ein Elektrofahrzeug in einer gemeinsamen Isolation geführt ist. Das Ladekabel ist elektrisch isoliert. Dabei kann ein Isolationsmaterial, beispielsweise in einem Extruder auf die Anschlussleitungen des Ladekabels aufgebracht werden. Zusammen mit den Anschlussleitungen, die für den Ladevorgang notwendig sind, wird die Sicherungsleitung in der Isolation eingebracht.

Gemäß einem Ausführungsbeispiel wird vorgeschlagen, dass das Ladekabel eine Anschlusskonsole für ein Elektrofahrzeug aufweist. Insbesondere endseitig des Ladekabels ist ein Anschlussstecker oder eine Anschlussbuchse oder ein sonstiges Anschlussmittel vorgesehen, mit dem das Ladekabel mit dem Elektrofahrzeug kontaktiert werden kann. Die Anschlussleitungen des Ladekabels sind ausgehend von der Ladeschutzschaltung durch das Ladekabel bis in die Anschlusskonsole durchkontaktiert. Es wird vorgeschlagen, dass die Sicherungsleitung in dem Ladekabel, außerhalb der Anschlusskonsole terminiert ist. Somit ist innerhalb des Ladekabels die Sicherungsleitung dauerhaft mit einem elektrischen Potential versehen, die Anschlusskonsole jedoch im Falle einer inaktiven Ladestation, also wenn kein Ladevorgang stattfindet, frei von einem elektrischen Potential, da die Sicherungsleitung nicht bis in die Anschlusskonsole geführt ist. Innerhalb der Anschlusskonsole sind bevorzugt keinerlei Kontakte vorgesehen, die ein derartig hohes Potential aufweisen, dass ein elektrischer Schlag zu befürchten ist. Natürlich kann in der Anschlusskonsole zumindest ein Kontakt vorgesehen sein, um eine Ladebereitschaft zu sensieren oder auch ein Kontakt für eine Kommunikation zwischen Ladestation und Fahrzeug. Solches Kontakte liegen jedoch bei einem niedrigen elektrischen Potential von z.B. 5 V oder 12 V. Das elektrische Potential solcher Kontakte ist nicht derartig hoch, dass ein elektrischer Schlag zu befürchten ist.

Wie bereits Eingangs erläutert, ist das Ladekabel elektrisch abgesichert. Dabei sind in der Ladeschutzschaltung insbesondere ein Fehlstrom- und/oder ein Überstromschutzschalter vorgesehen. Es wird vorgeschlagen, dass die Sicherungsleitung eine derartige Schutzschaltung überbrückt. Im Falle eines Diebstahlversuchs wird somit die Sicherungsleitung nicht von dem Versorgungsnetz durch die in der Ladeschutzschaltung vorgesehenen Schutzmechanismen wie Fehlstromschutzschaltung und Überstromschutzschaltung unterbrochen. Vielmehr kommt es zu einem elektrischen Schlag.

Gemäß einem Ausführungsbeispiel wird vorgeschlagen, dass die Sicherungsleitung zumindest in Teilen die Ladeschutzschaltung überbrückend mit dem Versorgungsnetzanschluss verbunden ist. Natürlich kann zwischen der Sicherungsleitung und dem Versorgungsnetz noch eine Schutzschaltung, insbesondere zum Schutz des Versorgungsnetzes, vorgesehen sein. Eine solche ist jedoch so dimensioniert, dass erheblich höhere Fehlströme und/oder Überströme fließen können, als bei der Ladeschutzschaltung, so dass bei einem Diebstahlversuch nach wie vor ein Stromschlag zu befürchten ist.

Um sicher zu stellen, dass bei einem Diebstahlversuch auch die Sicherungsleitung durch das Trennwerkzeug zum Durchtrennen des Kabels elektrisch kontaktiert wird, wird vorgeschlagen, dass die Sicherungsleitung innerhalb des Ladekabels radial weiter außen angeordnet ist, als zumindest eine der Anschlussleitungen. Somit ist es unmöglich, die Anschlussleitungen zu kappen, ohne die Sicherungsleitung zu beschädigen bzw. zu durchtrennen. Die Sicherungsleitung ist dabei insbesondere helixförmig um zumindest eine, vorzugsweise alle Anschlussleitungen gewickelt. Um diese Wicklung ist eine gemeinsame Isolation gelegt, so dass von außen nicht zu erkennen ist, in welchem Bereich die Sicherungsleitung innerhalb des Ladekabels verläuft.

Gemäß einem Ausführungsbeispiel wird vorgeschlagen, dass die Sicherungsleitung innerhalb des Ladekabels als Geflecht, insbesondere als Schirmgeflecht um die Anschlussleitungen herum geführt ist. Die Sicherungsleitung ist somit eine äußere Leitung innerhalb des Ladekabels und wird bei einem Diebstahlversuch stets kontaktiert.

Um die Personensicherheit zu gewährleisten und gleichzeitig ein Abtrennen des Kabels wirksam zu verhindern, wird auch vorgeschlagen, dass die Sicherungsleitung innerhalb des Ladekabels innen angeordnet ist. Insbesondere eine Anordnung zentral in dem Ladekabel, umgeben von den Anschlussleitungen bietet einen ausreichenden Personenschutz. Kommt es zu einer Beschädigung am Kabel, wirken die Sicherungen der Anschlussleitungen. Wird aber versucht, das Kabel zu durchtrennen, wird auch die zentrale Sicherungsleitung berührt und/oder beschädigt und/oder durchtrennt, was zwangsläufig zu einem Stromschlag führt.

Gemäß einem Ausführungsbeispiel wird vorgeschlagen, dass die Sicherungsleitung getrennt von den Anschlussleitungen gegenüber dem Versorgungsnetzanschluss abgesichert ist. Wie bereits erläutert, kann eine Überstromschutzschaltung an der Sicherungsleitung vorgesehen sein, wobei die Stromstärken einer solchen Überstromschutzschaltung größer als diejenigen der Anschlussleitung dimensioniert ist. Das heißt, dass in einem Falle eines Diebstahlversuchs Ströme fließen, die nicht zum Auslösen der Überstromschutzschaltung führen. Insbesondere ist die Sicherungsleitung nicht mit einem Fehlstromschutzschalter gegenüber dem Versorgungsnetzanschluss abgesichert.

Gemäß einem Ausführungsbeispiel wird vorgeschlagen, dass die Sicherungsleitung innerhalb des Ladekabels oder innerhalb der Anschlusskonsole über ein passives Bauelement mit einem Referenzpotential verbunden ist. In der Ladestation kann eine Überwachungsschaltung für das passive Bauelement angeordnet sein. Mit der Überwachungsschaltung kann beispielsweise ein Abschlusswiderstand des Bauelements gemessen werden. Über diese Messung kann festgestellt werden, ob die Sicherungsleitung intakt ist oder nicht. Eine Änderung der elektrischen Eigenschaft des Bauelementes kann in der Überwachungsschaltung sensiert werden. Gegebenenfalls kann bei einer sensierten Änderung von der Überwachungsschaltung ein Signal an eine entfernte Zentrale übermittelt werden und somit dem Betreiber der Ladestation signalisiert werden, dass die Sicherungsleitung beschädigt ist.

An der Ladestation kann das fest angeschlagene Ladekabel an seinem freien Ende außerhalb der Ladestation geführt sein. Auch ist es möglich, dass die Ladestation das Ladekabel mechanisch in das Innere des Gehäuses einzieht und somit bereits mechanisch vor Diebstahl sichert. Im Falle eines Ladevorgangs kann das Kabel freigegeben werden und aus der Ladestation herausgezogen werden. Auch ist es möglich, dass das Ladekabel an einem Mast und/oder Galgen geführt ist und so eine "Über-Kopf-Lösung" darstellt. Wie das Ladekabel an der Ladestation angeschlagen ist, ist frei wählbar.

Ein weiterer Aspekt ist ein Verfahren zur Sicherung eines Ladekabels an einer Ladestation. Dabei wird eine Sicherungsleitung zumindest in Teilen eine Ladeschutzschaltung überbrückend dauerhaft mit einem elektrischen Potential verbunden. Die Sicherungsleitung ist dabei getrennt von den Anschlussleitungen, die für einen Ladevorgang eines Elektrofahrzeugs in dem Ladekabel vorgesehen sind.

Darüber hinaus kann der Zustand der Sicherungsleitung überwacht werden und bei einer Veränderung des Zustands kann eine Signalisierung an eine Zentrale erfolgen.

Nachfolgend wird der Gegenstand anhand einer Ausführungsbeispiele zeigenden Zeichnung näher erläutert. In der Zeichnung zeigen:
- Fig. 1a-c: verschiedene Ladestationen;
- Fig. 2: eine Kontaktierung von Anschlussleitung und Sicherungsleitung innerhalb einer Ladestation;
- Fig. 3a-e: verschiedene Konfigurationen von Ladekabeln;
- Fig. 4a, b: den Abschluss einer Sicherungsleitung in einem Ladekabel.

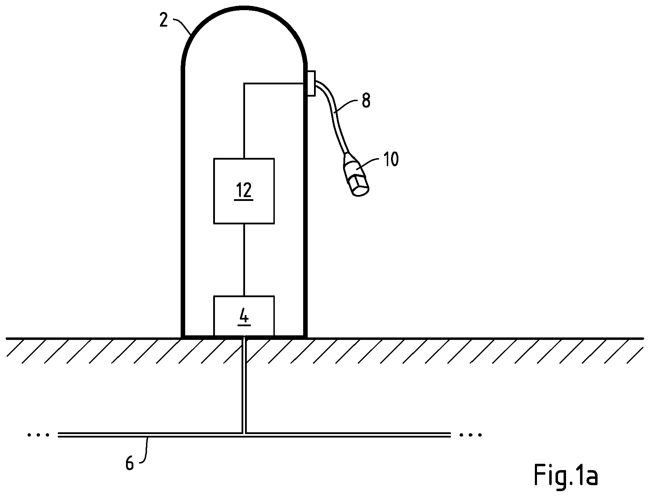

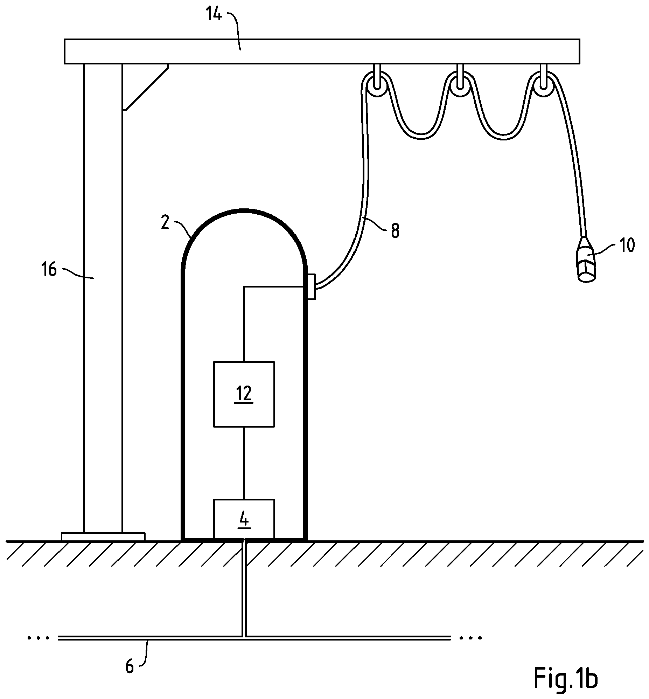

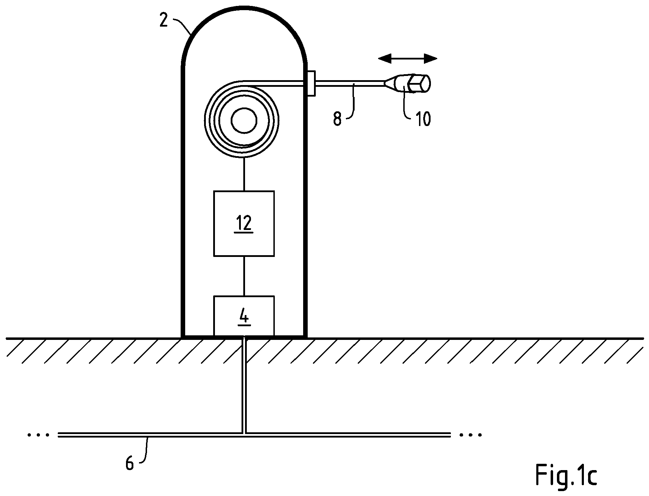

Fig. 1 zeigt eine Ladestation 2, welche über einen Versorgungsnetzanschluss 4 mit einem elektrischen Versorgungsnetz 6 verbunden ist. Außerhalb der Ladestation 2 ist ein Ladekabel 8 mit einer Anschlusskonsole 10, beispielsweise einem Ladekabelstecker angeordnet.

Das Ladekabel 8 ist innerhalb der Ladestation 2 unter anderem auch über eine Ladeschutzschaltung 12 mit dem Versorgungsnetzanschluss 4, mithin auch dem elektrischen Versorgungsnetz 6 verbunden.

Das Ladekabel 8 ist bei den gezeigten Ausführungsbeispielen fest an der Ladestation 2 angeschlagen und elektrisch als auch mechanisch dauerhaft mit der Ladeschutzschaltung 12 verbunden. Das freie Ende des Ladekabels 8 ist aus der Ladestation 2 herausgeführt.

Bei dem Ausführungsbeispiel gemäß der Fig. 1b ist das Ladekabel 8 bzw. dessen freies Ende an einem Galgen 14, der an einem Mast 16 geführt ist, angeordnet. Dadurch ist das Ladekabel 8 frei verschwenkbar. Der Aufbau der Ladestation 2 ist jedoch zu der Fig. 1a identisch.

Fig. 1c zeigt ein weiteres Ausführungsbeispiel einer Ladestation 2. Hierbei ist das Ladekabel 8 innerhalb der Ladestation 2 aufwickelbar. Das Ladekabel 8 kann aus der Ladestation 2 herausgezogen werden und wird automatisch oder teilautomatisch von der Ladestation 2 nach Ende eines Ladevorgangs zurückgezogen. Das Ladekabel 8 ist somit innerhalb des Gehäuses 2 angeordnet. Diese und andere Konfigurationen von Ladestationen 2 haben stets ein fest angeschlagenes Ladekabel. Das fest angeschlagene Ladekabel ist elektrisch mit dem Versorgungsnetzanschluss 4 verbunden.

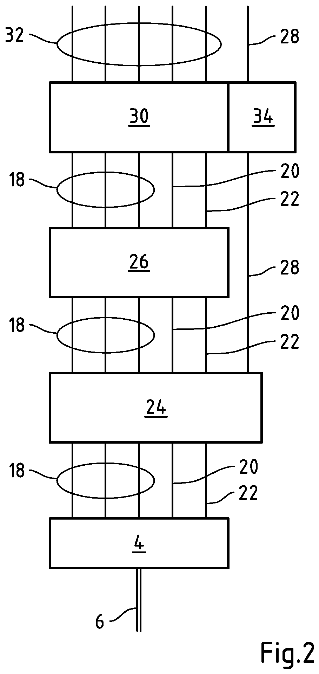

Fig. 2 zeigt schematisch, dass an dem Versorgungsnetzanschluss 4 drei Phasen 18 (L1, L2, L3) ein Nullleiter 20 (N) sowie ein Erdleiter 22 (PE) angeschlossen sind. Über eine Schutzschaltung 24 ist das Versorgungsnetz 6 gegenüber der Ladestation abgesichert.

In der Schutzschaltung 24 kann beispielsweise ein Lasttrennschalter vorgesehen sein. Mit dem Lasttrennschalter können die Phasen 18 von dem Versorgungsnetz 4 getrennt werden können. Der Lasttrennschalter kann als Absicherung des Versorgungsnetzes 6 vorgesehen sein.

Eine Auslösestromstärke des Schutzschalters 24 ist jedoch erheblich größer als eine Auslösestromstärke eines nachgeordneten Schutzschalters 26, der als Ladeschutzschalter gebildet ist. In dem Schutzschalter 26 kann beispielsweise ein Überstromschutzschalter vorgesehen sein. In dem Schutzschalter 26 kann beispielsweise ein Fehlstromschutzschalter vorgesehen sein. Die Schalter können alternativ oder kumulativ vorgesehen sein.

Von dem Schutzschalter 24 zweigen die Phasen 18, der Nullleiter 20 sowie der Erdleiter 22 ab. Diese Leiter sind Teil der Anschlussleitungen und werden auf den Schutzschalter 26 geführt. Parallel dazu wird eine Sicherungsleitung 28 aus der Schutzschaltung 24 herausgeführt. Die Sicherungsleitung 28 ist unmittelbar oder über einen Begrenzungswiderstand mit einer der Phasen 18 verbunden. Diese Verbindung ist jedoch bevorzugt ausgangsseitig der Schutzschaltung 24, so dass die Sicherungsleitung 28 gegenüber dem Versorgungsnetz 6 nur über die Schutzschaltung 24 abgesichert ist.

Die Phasen 18, der Nullleiter 20 sowie der Erdleiter 22 werden auf eine Ladesteuerschaltung 30 geführt. Die Ladesteuerschaltung 30 dient der Steuerung eines Ladevorgangs und hat an seinem Ausgang die Leitungen des Ladekabels, insbesondere die Anschlussleitungen 32 mit einer bis hin zu drei Phasen, einem Nullleiter, einem Erdungsleiter sowie ggf. zusätzlich einem Pilotleiter als auch einem Plug-Present-Leiter. Diese Leitungen zusammen bilden die Anschlussleitungen 32.

Zusätzlich hierzu ist die Sicherungsleitung 28 vorgesehen. Die Sicherungsleitung 28 ist über eine Sensorschaltung 34 geführt, mit der ein elektrischer Zustand der Sicherungsleitung 28 überwacht werden kann. Die Anschlussleitungen 32 samt Sicherungsleitung 28 werden in einem Ladekabel 8 aus der Ladestation 2 heraus geführt.

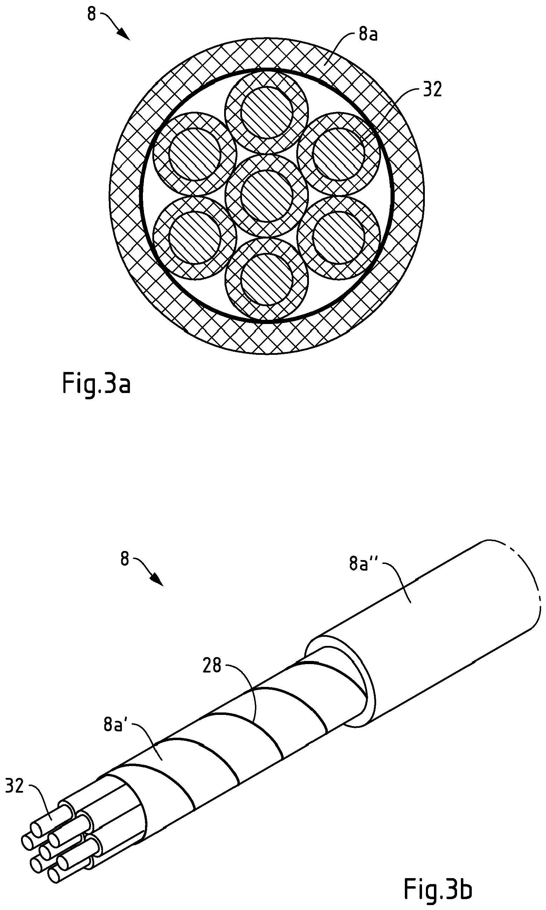

Ein herkömmliches Ladekabel 8 ist in der Fig. 3a gezeigt. Das Ladekabel 8 hat eine Isolation 8a und innerhalb der Isolation 8a sind die Anschlussleitungen 32 jeweils einzeln isoliert geführt.

Fig. 3b-e zeigen ein Ladekabel 8 mit der gegenständlichen Sicherungsleitung 28. Die Sicherungsleitung 28 kann, wie in Fig. 3b gezeigt, helixförmig gewickelt um eine innere Isolation 8a' der Anschlussleitungen liegen. Zusammen können diese geschützt von einer äußerer Isolation 8a" das Ladekabel 8 bilden.

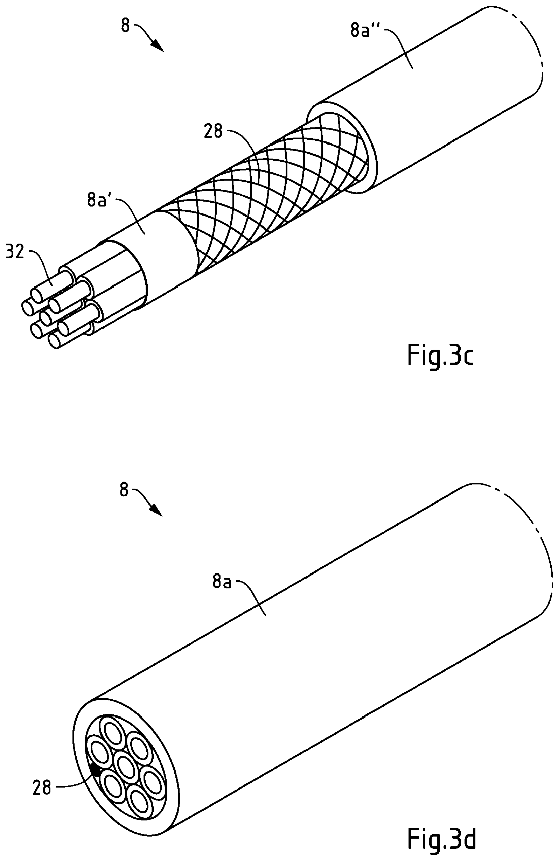

Auch ist es möglich, dass die Sicherungsleitung 28 als Schirmgeflecht, wie in der Fig. 3c gezeigt, auf einer inneren Isolation 8a' innerhalb einer äußeren Isolation 8a" des Ladekabels 8 geführt ist.

Fig. 3d zeigt, dass die Sicherungsleitung 28 innerhalb einer gemeinsamen Isolation 8a der Anschlussleitungen 32 geführt ist.

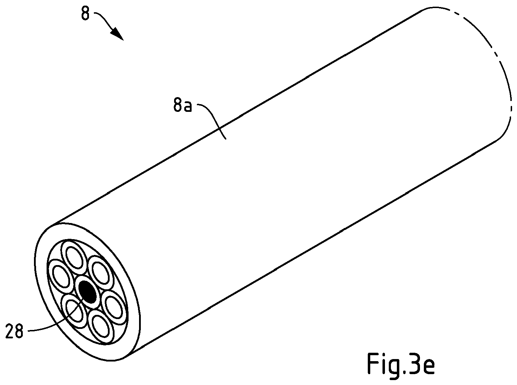

Fig. 3e zeigt, dass die Sicherungsleitung 28 zentrale innerhalb einer gemeinsamen Isolation 8a der Anschlussleitungen 32 geführt ist. Die Sicherungsleitung 28 liegt radial weiter innen als die Anschlussleitungen 32.

Den Ausführungsbeispielen ist gemeinsam, dass innerhalb des Ladekabels 8, insbesondere innerhalb der äußeren Isolation 8a" des Ladekabels 8 sowohl die Anschlussleitungen 32 als auch die Sicherungsleitung 28 geführt sind. Ferner ist allen Ausführungsbeispielen gemeinsam, dass die Sicherungsleitungen 28 die Ladeschutzschaltung 26 überbrückend mit dem Versorgungsnetzanschluss 4 verbunden ist und somit dauerhaft auf einem elektrischen Potential, unabhängig von einem Ladevorgang, ist. Die Anschlussleitungen 32 werden gesteuert über die Ladesteuerschaltung 30 abhängig vom Zustand eines Ladevorgangs mit elektrischem Potential belegt oder nicht.

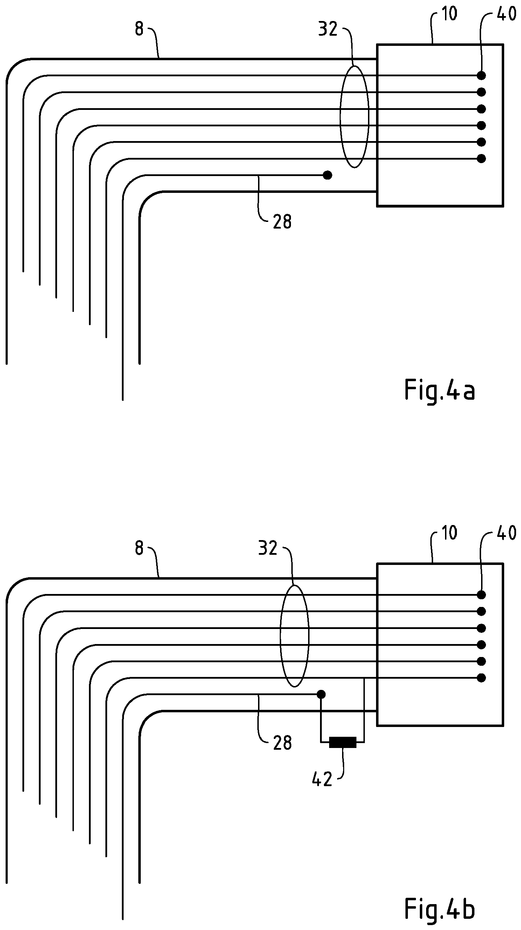

Fig. 4a zeigt das Ladekabel 8, welches über die Anschlusskonsole 10 terminiert ist. Die Anschlussleitungen 32 des Ladekabels 8 werden auf Anschlusskontakte 40 der Anschlusskonsole 10 geführt. Innerhalb des Ladekabels 8, noch außerhalb der Anschlusskonsole 10, ist die Sicherungsleitung 28 terminiert, wie in der Fig. 4a zu erkennen ist. Dies hat den Vorteil, dass kein Anschlusskontakt 40 dauerhaft mit dem Potential der Sicherungsleitung 28 kontaktiert ist und somit die Anschlusskonsole 10 sicher gegenüber elektrischem Schlag ist.

Fig. 4b zeigt ein weiteres Ausführungsbeispiel, bei dem die Sicherungsleitung 28 über einen Abschlusswiderstand 42 gegenüber beispielsweise einem Potential der Anschlussleitungen 32 oder dem Nullleiter terminiert ist. Über die Überwachungsschaltung 34 kann somit der elektrische Zustand der Sicherungsleitung 28 überwacht werden.

### Bezugszeichenliste

- 2: Ladestation
- 4: Versorgungsnetzanschluss
- 6: Versorgungsnetz
- 8: Ladekabel
- 10: Anschlusskonsole
- 12: Ladeschutzschaltung
- 14: Galgen
- 16: Mast
- 18: Phasen
- 20: Nullleiter
- 22: Erdleiter
- 24: Schutzschaltung
- 26: Ladeschutzschaltung
- 28: Sicherungsleistung
- 30: Ladesteuerschutzschaltung
- 32: Anschlussleitungen
- 34: Überwachungsschaltung
- 40: Kontakte

## Patentansprüche

1. Ladestation mit
- einem Versorgungsnetzanschluss,
- einem angeschlagenen Ladekabel mit Anschlussleitungen für ein Elektrofahrzeug und
- einer zwischen dem Versorgungsnetzanschluss und dem Ladekabel angeschlossenen Ladeschutzschaltung,
**dadurch gekennzeichnet,**
- **dass** in dem Ladekabel zumindest eine Sicherungsleitung zumindest in Teilen die Ladeschutzschaltung überbrückend dauerhaft mit einem elektrischen Potential verbunden ist.

2. Ladestation nach Anspruch 1,
**dadurch gekennzeichnet,**
- **dass** die Sicherungsleitung zusammen mit den Anschlussleitungen für ein Elektrofahrzeug in einer gemeinsamen Isolation geführt ist.

3. Ladestation nach Anspruch 1 oder 2,
**dadurch gekennzeichnet,**
- **dass** das Ladekabel eine Anschlusskonsole für ein Elektrofahrzeug aufweist, dass die Anschlussleitungen in der Anschlusskonsole kontaktiert sind und dass die Sicherungsleitung in dem Kabel, außerhalb der Anschlusskonsole terminiert ist.

4. Ladestation nach einem der vorangehenden Ansprüche,
**dadurch gekennzeichnet,**
- **dass** die Sicherungsleitung eine Fehlstrom- und/oder eine Überstromschutzschaltung der Ladeschutzschaltung überbrückt.

5. Ladestation nach einem der vorangehenden Ansprüche,
**dadurch gekennzeichnet,**
- **dass** die Sicherungsleitung zumindest in Teilen die Ladeschutzschaltung überbrückend mit dem Versorgungsnetzanschluss verbunden ist.

6. Ladestation nach einem der vorangehenden Ansprüche,
**dadurch gekennzeichnet,**
- **dass** die Sicherungsleitung innerhalb des Ladekabels radial weiter außen angeordnet ist, als zumindest eine der Anschlussleitungen.

7. Ladestation nach einem der vorangehenden Ansprüche,
**dadurch gekennzeichnet,**
- **dass** die Sicherungsleitung innerhalb des Ladekabels als Geflecht, insbesondere als Schirmgeflecht der Anschlussleitungen geführt ist.

8. Ladestation nach einem der vorangehenden Ansprüche,
**dadurch gekennzeichnet,**
- **dass** die Sicherungsleitung innerhalb des Ladekabels zentral angeordnet ist und zumindest einer der Anschlussleitungen radial weiter außen angeordnet ist.

9. Ladestation nach einem der vorangehenden Ansprüche,
**dadurch gekennzeichnet,**
- **dass** die Sicherungsleitung getrennt von den Anschlussleitungen gegenüber dem Versorgungsnetzanschluss abgesichert ist, insbesondere dass eine Überstromschutzschaltung zwischen der Sicherungsleitung und dem Versorgungsnetzanschluss angeordnet ist, wobei die Überstromschutzschaltung für Stromstärken größer als diejenigen der Anschlussleitungen dimensioniert ist.

10. Ladestation nach einem der vorangehenden Ansprüche,
**dadurch gekennzeichnet,**
- **dass** die Sicherungsleitung innerhalb des Ladekabels oder innerhalb der Anschlusskonsole über einem passiven Bauelement mit einem Referenzpotential geschaltet ist und dass in der Ladestation eine Überwachungsschaltung für das passive Bauelement angeordnet ist.

11. Verfahren zur Sicherung eines Ladekabels an einer Ladestation nach einem der vorangehenden Ansprüche bei dem
- eine von für einen Ladevorgang eines Elektrofahrzeugs vorgesehenen Anschlussleitungen getrennte Sicherungsleitung zumindest in Teilen eine Ladeschutzschaltung überbrückend dauerhaft mit einem elektrischen Potential verbunden wird.

12. Verfahren nach Anspruch 11,
**dadurch gekennzeichnet,**
- **dass** ein elektrischer Zustand der Sicherungsleitung überwacht wird.
